# EUROPÄISCHE PATENTANMELDUNG

(11) **EP 4 147 772 A1**
(43) Veröffentlichungstag der Anmeldung: **15.03.2023**
(21) Anmeldenummer: 21196507.4
(22) Anmeldetag: 14.09.2021
(51) Int. Cl.: B01J 8/00, B01J 8/02, B01J 8/06, B01J 19/24, F28D 9/00, C01B 3/04

(54) **REAKTOR SOWIE VORRICHTUNG UND VERFAHREN ZUR SPALTUNG VON AMMONIAK**

(71) Anmelder: WS-Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Patentanwälte Ruff, Wilhelm, Beier, Dauster & Partner mbB

(57) **Zusammenfassung**

Die Erfindung betrifft einen Reaktor für endotherme Reaktionen, insbesondere zur Spaltung von Ammoniak mit einem Einlass (12) für eine Zufuhr eines Ausgangsgases und einem Auslass (13) für eine Abfuhr von Spaltgas, und mit einem von außen für eine endotherme Reaktion beheizbaren, mit einem Katalysator (2) befüllten Reaktorraum (14), sowie mit einem in dem Reaktor (1) angeordneten Flachrohrwärmetauscher (3), wobei der Flachrohrwärmetauscher (3) derart angeordnet ist, dass er von einem zu dem Reaktorraum (14) strömenden Ausgangsgas und von einem aus dem Reaktorraum (14) abströmenden Spaltgas durchströmbar ist, sodass Energie des abströmenden Spaltgases auf das zugeführte Ausgangsgas übertragbar ist. Die Erfindung betrifft weiter eine Vorrichtung (100), ein Modul (700) und ein Verfahren für endotherme Reaktionen.

## Beschreibung

### ANWENDUNGSGEBIET UND STAND DER TECHNIK

Die Erfindung betrifft einen Reaktor sowie eine Vorrichtung, ein Modul und ein Verfahren zur Durchführung endothermer Reaktionen bei hohen Temperaturen, insbesondere zur Spaltung von Ammoniak.

Derzeit werden jährlich weltweit etwa 150 Millionen Tonnen Ammoniak produziert, in erster Linie für die Düngemittelindustrie.

Ammoniak besteht aus Stickstoff und Wasserstoff. Da eine Handhabung, ein Transport und eine Speicherung von Ammoniak deutlich einfacher ist als ein Umgang mit Wasserstoff, wird Ammoniak auch als Wasserstoff-Speicher und für einen Transport von Wasserstoff eingesetzt.

Ein für die Synthese notwendige Wasserstoff wird derzeit noch überwiegend durch Dampfreformierung von Erdgas gewonnen, wobei große Mengen C02 emittiert werden. Es gibt jedoch aktuell zahlreiche Projekte, um sogenannten grünen Ammoniak in Großanlagen mittels katalytischer Synthese aus abgetrenntem Luftstickstoff und grünem Wasserstoff herzustellen, d.h. aus Wasserstoff aus Solar- oder Windstrom.

Dieser grüne Ammoniak ist auch für eine zukünftige Energiewirtschaft interessant, da damit grüner Wasserstoff kostengünstig in flüssiger Form zum Endverbraucher transportiert werden kann. Für eine Rückumwandlung in Wasserstoff werden Vorrichtungen zur Spaltung von Ammoniak (üblicherweise als Ammoniak-Cracker bezeichnet) eingesetzt, die Ammoniak in 75% H2 und 25% N2 aufspalten. Dieses Spaltgas kann entweder direkt in Brennstoffzellen in Strom umgewandelt oder zu Wasserstoff aufbereitet werden, z.B. für eine Betankung von Busflotten, Lastwagen und Schiffen.

Im Gegensatz zur Herstellung des Ammoniaks, insbesondere auch des grünen Ammoniaks, in Großanlagen, soll eine Rückumwandlung des Ammoniaks in Wasserstoff dezentral, insbesondere direkt beim Verbraucher erfolgen.

Bei der Rückumwandlung oder Spaltung von Ammoniak handelt es sich um eine endotherme Reaktion, bei der eine benötigte Energie von außen zugeführt werden muss.

### AUFGABE UND LÖSUNG

Es ist eine Aufgabe der Erfindung, einen kleinbauenden Reaktor für endotherme Reaktionen bei hohen Temperaturen, insbesondere zur Spaltung von Ammoniak, mit einem hohen Wirkungsgrad zu schaffen. Es sind weitere Aufgaben der Erfindung, eine Vorrichtung sowie ein Modul umfassend einen Reaktor für endotherme Reaktionen und ein Verfahren zur Durchführung endothermer Reaktionen mit einem hohen Wirkungsgrad zu schaffen.

Diese Aufgaben werden gelöst durch die Gegenstände mit den Merkmalen der Ansprüche 1, 8, 13 und 15. Weitere vorteilhafte Ausgestaltungen ergeben sich aus den Unteransprüchen.

Gemäß einem ersten Aspekt wird ein Reaktor für endotherme Reaktionen, insbesondere zur Spaltung von Ammoniak mit einem Einlass für eine Zufuhr eines Ausgangsgases und einem Auslass für eine Abfuhr von Spaltgas, mit einem von außen für eine endotherme Reaktion beheizbaren, mit einem Katalysator befüllten Reaktorraum, geschaffen, wobei in dem Reaktor ein Flachrohrwärmetauscher umfassend Flachrohre mit Strömungskanälen für das zugeführte Ausgangsgas und das abströmende Spaltgas in und zwischen den Flachrohren derart angeordnet ist, dass der Flachrohrwärmetauscher von einem zu dem Reaktorraum strömenden Ausgangsgas und von einem aus dem Reaktorraum abströmenden Spaltgas durchströmbar ist, sodass Energie des abströmenden Spaltgases auf das zugeführte Ausgangsgas übertragbar ist.

Die Begriffe "ein", "einer" etc. werden im Zusammenhang mit der Anmeldung als unbestimmte Artikel und nicht als Zählwörter verwendet. Ebenso dienen die Begriffe "erster" und "zweiter" in Zusammenhang mit der Anmeldung lediglich zur Unterscheidung und geben keine Reihenfolge an. Auch verlangen die Begriffe "erste", "erster" etc. nicht zwangsweise ein Vorhandensein von zweiten baugleichen oder ähnlichen Elementen.

Als Ausgangsgas wird im Zusammenhang mit der Anmeldung ein dem Reaktor zugeführtes Gas oder Gasgemisch bezeichnet. Als Spaltgas wird ein durch die Reaktion erhaltenes Gasgemisch bezeichnet, welches insbesondere durch die endotherme Reaktion erhaltenen Wasserstoff umfasst.

Der Reaktor ist für endotherme Reaktionen bei hohen Temperaturen geeignet. Als hohe Temperaturen werden im Zusammenhang mit der Anmeldung Temperaturen über 600°C bezeichnet.

Mittels des Flachrohwärmetauschers kann eine nach der bei hohen Temperaturen durchgeführten endothermen Reaktion verbleibende Wärme des Spaltgases zurückgewonnen und so ein Bedarf an Heizenergie für die in dem Reaktorraum durchgeführte endotherme Reaktion reduziert werden. Flachrohrwärmetauscher zeichnen sich insbesondere durch eine große Wärmetauscherfläche bei einem geringeren Bauraum aus. Zudem sind Flachrohrwärmetauscher widerstandsfähig gegen mechanische Beanspruchungen aufgrund schneller Last- oder Temperaturwechsel. Der Flachrohrwärmetauscher ist in den Reaktor integriert, sodass eine kompakte Lösung geschaffen wird.

Bei dem Ausgangsgas handelt es sich insbesondere um Ammoniak. Je nach Gestaltung des Flachrohrwärmetauschers und des Reaktorraums ist es dabei möglich, einen Reaktor für eine Spaltung des Ammoniaks mit einem Wirkungsgrad (Heizwert H2/ Heizwert NH3) von mindestens 80%, insbesondere von mindestens 85% zu erzielen.

Der Reaktor ist jedoch auch für andere Ausgangsgase einsetzbar, wobei es sich bei dem Ausgangsgas auch um ein Gasgemisch handeln kann. Beispielsweise ist es denkbar, den Reaktor für eine Dampfreformierung, insbesondere von Erdgas, einzusetzen. Dabei kann in einer Ausgestaltung auch vorgesehen sein, dass dem Reformer mehrere Ausgangsgase zu geführt werden, wobei je nach Gestaltung alle Ausgangsgase in dem Flachrohrwärmetauscher erwärmt werden oder nur ein Teil der Ausgangsgase.

Der Flachrohrwärmetauscher kann durch den Fachmann je nach Anwendungsfall geeignet ausgelegt werden, sodass der Flachrohrwärmetauscher für hohe Temperaturen geeignet ist. Der Flachrohrwärmetauscher ist in vorteilhaften Ausgestaltungen ein Gegenstrom-Wärmetauscher, wobei der Flachrohrwärmetauscher derart angeordnet ist, dass er von dem zu dem Reaktorraum strömenden Ausgangsgas und von dem aus dem Reaktorraum abströmenden Spaltgas in Gegenrichtung durchströmbar ist. Es sind jedoch auch andere Bauformen denkbar.

Die endotherme Reaktion, insbesondere eine Spaltung des Ammoniaks, erfolgt dabei getrennt von einem Brennraum zur Beheizung des Reaktors, sodass das aus dem Reaktor abströmende Spaltgas je nach Bedarf in einer Verbrennung nutzbar, oder für andere Zwecke verwendbar ist. Beispielswese ist ein Wasserstoff des Spaltgases in einer Brennstoffzelle in Strom umwandelbar und/oder zu reinem Wasserstoff, beispielsweise in einer Druckwechsel-Anlage, aufbereitbar.

Ein flüssiger Ammoniak wird in einer Anwendung vor einer Zufuhr zu dem Reaktor verdampft. Bei einem Verdampfen entstehende Kälteleistung kann in vorteilhaften Ausgestaltungen anderweitig verwendet werden.

Ein Hochtemperatur-Flachrohrwärmetauscher für gasförmige Medien Ist beispielsweise aus EP 2 584 301 A1 bekannt, auf welche hiermit vollumfänglich Bezug genommen wird. Die Erfindung ist jedoch nicht auf die Verwendung eines aus EP 2 584 301 A1 bekannten Wärmetauschers beschränkt.

In einer Ausgestaltung ist eine Spaltweite der Strömungskanäle kleiner 3 mm. Durch eine enge Anordnung der Flachrohre wird eine gute Wärmeübertragung bei einem kleinen Bauraum sichergestellt.

In einer Ausgestaltung ist der Flachrohrwärmetauscher derart gestaltet, dass eine Wärmetauscherfläche das ca. 2-fache bis ca. 4-fache einer beheizten Fläche des Reaktors beträgt. Beispielsweise ist bei einem Reaktor für eine Spaltung von Ammoniak vorgesehen, dass die Wärmetauscherfläche in m2 etwa das 0,06-fache bis 0,1-fache, insbesondere das 0,08-fache des Durchsatzes an Ammoniak in kg/h beträgt.

Der Reaktor umfasst in einer Ausgestaltung ein Außenrohr mit einem ersten Ende, an welchem der Einlass und der Auslass angeordnet sind, und mit einem geschlossenen zweiten Ende, wobei der Flachrohrwärmetauscher ein zylindrischer Flachrohrwärmetauscher ist, der zwischen dem ersten Ende und dem Reaktorraum in dem Außenrohr angeordnet ist.

Als zylindrischer Flachrohrwärmetauscher wird im Zusammenhang mit der Anmeldung ein Flachrohrwärmetauscher bezeichnet, bei welchem die Flachrohre auf konzentrischen Kreisen angeordnet sind. In einer Ausgestaltung ist dabei auf jedem Kreis die gleiche Zahl an Flachrohren vorgesehen. Zwischen den Rohren sind in einer Ausgestaltung gewellte Abstandshalter angeordnet, mittels welchen eine Wärmetauscherfläche weiter vergrößert wird.

Der Reaktorraum und der Flachrohrwärmetauscher sind auf geeignete Weise miteinander verbunden, sodass das über den Einlass zugeführte Ausgangsgas über erste Strömungskanäle des Wärmetauschers dem Reaktorraum zugeführt und das aus dem Reaktorraum abströmende Spaltgas über zweite Strömungskanäle des Wärmetauschers zu dem Auslass geführt wird.

In einer Ausgestaltung ist vorgesehen, dass der Reaktor ein in dem Reaktorraum angeordnetes Innenrohr, vorzugsweise zwei in dem Reaktorraum angeordnete Innenrohre aufweist, wobei das/die in dem Reaktorraum angeordnete/angeordneten Innenrohr/Innenrohre über erste Strömungskanäle des Wärmetauschers mit dem Einlass verbunden ist/sind. Im Gebrauch für eine Spaltung von Ammoniak ist der Reaktor vorzugsweise derart ausgerichtet, dass der Flachrohrwärmetauscher oberhalb des Reaktorraums angeordnet ist. Mittels der Innenrohre wird das in dem Flachrohrwärmetauscher vorgewärmte Ammoniak unter den in dem Reaktorraum angeordneten Katalysator geleitet und kann über den Katalysator zur Spaltung des Ammoniaks um die Innenrohre in dem Außenrohr nach oben strömen, wobei das Außenrohr von außen beheizbar ist.

In einer Verwendung des Reaktors, wird das aus dem Reaktor abströmende Spaltgas anschließend in einer Druckwechselanlage zur Trennung des Gasgemisches aufbereitet. Der Reaktor, insbesondere das Außenrohr des Reaktors, ist zu diesem Zweck in einer Ausgestaltung für einen Überdruck, insbesondere für einen Überdruck bis maximal 20 bar ausgelegt.

In einer Ausgestaltung des Reaktors ist ein Kanal für eine Zufuhr des Katalysators vorgesehen, wobei vorzugsweise der Flachrohrwärmetauscher den Kanal umgibt. Dadurch ist eine kompakte Bauweise möglich, wobei eine Zufuhr des Katalysators von einem ersten Ende des Reaktors möglich ist. Dies erlaubt eine Zufuhr des Katalysators auch in einem verbauten Zustand.

Gemäß einem zweiten Aspekt wird eine Vorrichtung für endotherme Reaktionen, insbesondere zur Spaltung von Ammoniak, mit einem wärmeisolierten Brennraum und einem Reaktor geschaffen, wobei der Reaktorraum des Reaktors in dem Brennraum, von diesem stofflich getrennt angeordnet ist.

Wie erwähnt, werden die Begriffe "ein", "einer" etc. im Zusammenhang mit der Anmeldung als unbestimmte Artikel und nicht als Zählwörter verwendet. Die Vorrichtung umfasst insbesondere in einer Ausgestaltung mehr als einen, beispielsweise zwei, drei, vier oder mehr als zehn, insbesondere bis zu zwanzig oder mehr Reaktoren, wobei in Abhängigkeit einer Anzahl der Reaktoren eine Leistung der Vorrichtung für einen Bedarf, beispielsweise bis 100 kg/h Wasserstoff anpassbar ist.

Der Brennraum und der Brenner sind dabei je nach Anwendungsfall durch den Fachmann geeignet gestaltbar, sodass den Brennraum eine für die endotherme Reaktion in dem Reaktorraum notwendige Temperatur erzeugbar ist.

In einer Ausgestaltung ist ein mittels des Spaltgases, einem Anodenrestgas einer Brennstoffzelle und/oder einem Spülgas einer Druckwechselanlage betreibbarer Brenner vorgesehen. Der Brenner ist ein Rekuperativ- oder ein Regenerativ-Brenner, sodass zur weiteren Steigerung einer Energieeffizienz eine Abgas-Wärmerückgewinnung möglich ist.

In einer Ausgestaltung ist der Reaktorraum in dem Brennraum derart angeordnet, dass ein Gasstrom durch den Reaktorraum von einem an einer Außenseite des Reaktorraums strömenden Heizgas im Gleichstromprinzip erwärmbar ist.

Alternativ oder zusätzlich zu einem Brenner ist in einer Ausgestaltung der Brennraum mittels elektrischer Energie beheizbar. Ein Beheizen mittels elektrischer Energie ist insbesondere in Betriebspausen des Reaktors denkbar, wenn kein Gas für einen Betrieb eines Brenners erzeugt wird und eine Temperatur des Reaktors beibehalten werden soll, und/oder bei einem Anfahren der Vorrichtung nach einer Betriebspause.

Der Reaktor ist in einer Ausgestaltung in einer als Abdeckung für den Brennraum dienenden Halterung eingesetzt. Bei einer Bauweise mit mehreren Reaktoren sind dabei in einer Ausgestaltung mehrere Reaktoren und ein Brenner in einer gemeinsamen Halterung eingesetzt. Ein so geschaffenes Modul kann je nach Anwendungsfall allein oder in Kombination mit weiteren Modulen verwendet werden.

Entsprechend wird gemäß einem dritten Aspekt ein Modul umfassend mehrere Reaktoren, insbesondere vier Reaktoren, und einen Brenner geschaffen, wobei die Reaktoren und der Brenner an einer Halterung angebracht sind.

Die Halterung ist in einer Ausgestaltung zumindest bereichsweise aus einem wärmeisolierenden Material gefertigt und umgibt die Reaktoren im Bereich der Wärmetauscher. Das Modul wird vorzugweise von oben auf einen Brennraum aufgesetzt, wobei Einlass, Auslass und - sofern vorhanden - ein Kanal für eine Zufuhr des Katalysators von oben zugänglich sind.

Gemäß einem vierten Aspekt wird ein Verfahren zur Durchführung endothermer Reaktionen in einem Reaktor mit einem Einlass für eine Zufuhr eines Ausgangsgases und einem Auslass für eine Abfuhr von Spaltgas, mit einem von außen für eine endotherme Reaktion beheizbaren, mit einem Katalysator befüllten Reaktorraum, und mit einem stromaufwärts des Reaktorraums in dem Reaktor angeordneten Flachrohrwärmetauscher geschaffen, wobei der Flachrohrwärmetauscher von einem zugeführten Ausgangsgas und einem abströmenden Spaltgas durchströmt wird, sodass Energie des abströmenden Spaltgases auf das zugeführte Ausgangsgas übertragen wird.

Insbesondere wird ein Verfahren zur Spaltung von Ammoniak in einem Reaktor mit einem Einlass für eine Zufuhr von Ammoniak und einem Auslass für eine Abfuhr von Spaltgas, mit einem von außen für eine endotherme Reaktion beheizbaren, mit einem Katalysator befüllten Reaktorraum, und mit einem stromaufwärts des Reaktorraums in dem Reaktor angeordneten Flachrohrwärmetauscher geschaffen, wobei der Flachrohrwärmetauscher von einem zugeführten Ammoniak und einem abströmenden Spaltgas durchströmt wird, sodass Energie des abströmenden Spaltgases auf das zugeführte Ammoniak übertragen wird.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1:: einen Reaktor mit einem Reaktorraum und einem Flachrohrwärmetauscher in einem Längsschnitt,
- Fig. 2:: den Reaktor gemäß Fig. 1 in einem Querschnitt entlang einer Schnittlinie II-II gemäß Fig. 1,
- Fig. 3:: den Reaktor gemäß Fig. 1 in einem Querschnitt entlang einer Schnittlinie III-III gemäß Fig. 1,
- Fig. 4:: eine Vorrichtung umfassend einen Reaktor gemäß Fig. 1 in einem Längsschnitt,
- Fig. 5:: einen Temperaturverlauf der Gasströme in einer Vorrichtung gemäß Fig, 4,
- Fig. 6:: ein Modul umfassend vier Reaktoren gemäß Fig. 1 in einer perspektivischen Darstellung und
- Fig. 7:: eine Vorrichtung umfassend vier Module gemäß Fig. 6 in einer perspektivischen Darstellung Detaillierte Beschreibung der Ausführungsbeispiele

### DETAILLIERTE BESCHREIBUNG DER AUSFÜHRUNGSBEISPIELE

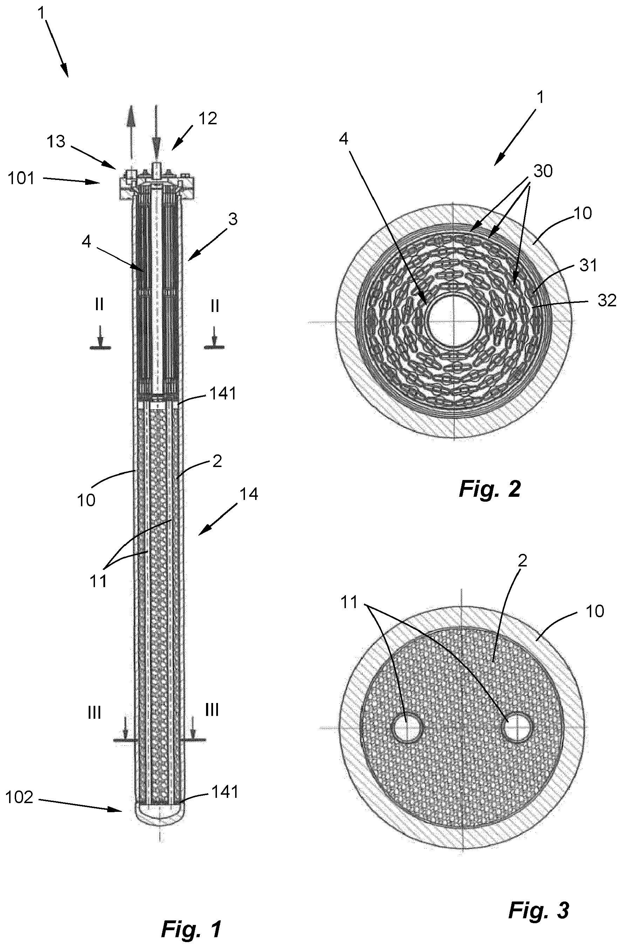

Fig. 1 bis 3 zeigen einen Reaktor 1 für endotherme Reaktionen, insbesondere zur Spaltung von Ammoniak, in einem Längsschnitt, einem Querschnitt entlang einer Schnittlinie II-II gemäß Fig. 1 und in einem Querschnitt entlang einer Schnittlinie III-III gemäß Fig. 1.

Der dargestellte Reaktor 1 umfasst ein Außenrohr 10 und zwei Innenrohre 11. Das Außenrohr 10 weist ein in der dargestellten Gebrauchsstellung oben angeordnetes erstes Ende 101 auf, an welchem ein Einlass 12 für eine Zufuhr eines Ausgangsgases und ein Auslass 13 für eine Abfuhr von Spaltgas vorgesehen sind. Ein dem gegenüberliegendes zweites Ende 102 des Außenrohrs 10 ist geschlossen.

In dem Außenrohr 10 ist ein mit einem Katalysator 2 befüllter Reaktorraum 14 vorgesehen, wobei in dem dargestellten Ausführungsbeispiel der Reaktorraum 14 an beiden Enden durch Abschlussplatten 141 begrenzt ist. Die Innenrohre 11 erstrecken sich durch den Reaktorraum 14, wobei der Katalysator 2 um die Innenrohre 11 angeordnet ist. In dem dargestellten Ausführungsbeispiel sind zwei Innenrohre 11 vorgesehen. In anderen Ausgestaltungen ist nur ein Innenrohr oder sind mehr als zwei Innenrohre vorgesehen.

Zwischen dem ersten Ende 101 und dem Reaktorraum 14 ist ein Flachrohrwärmetauscher 3 in dem Außenrohr 10 angeordnet. In dem dargestellten Ausführungsbeispiel ist der Flachrohrwärmetauscher 3 oberhalb des Reaktorraums 14 in dem Außenrohr 10 angeordnet. Der dargestellte Flachrohrwärmetauscher 3 ist als zylindrischer Flachrohrwärmetauscher mit Flachrohren 30, welche entlang konzentrischer Kreise angeordnet sind, gestaltet.

Im Bereich des Flachrohrwärmetauschers 3 ist mittig ein Kanal 4 für eine Zufuhr des Katalysators 2 vorgesehen, wobei die Flachrohre 30 in dem dargestellten Ausführungsbeispiel um den Kanal 4 angeordnet sind.

In den Flachrohren 30 und um die Flachrohre 30 sind Strömungskanäle gebildet, welche als erste Strömungskanäle 31 bzw. zweite Strömungskanäle 32 bezeichnet werden.

Der Flachrohrwärmetauscher 3 ist in dem dargestellten Ausführungsbeispiel mit dem Einlass 12 und dem Reaktorraum 14 derart verbunden, dass die erste Strömungskanälen 31 von einem dem Reaktorraum 14 zugeführten Ausgangsgas stromaufwärts des Reaktorraums 14 durchströmt werden und die zweiten Strömungskanäle 32 von einem aus dem Reaktorraum 14 abströmenden Spaltgas durchströmt werden, sodass Energie des abströmenden Spaltgases auf das zugeführte Ausgangsgas übertragbar ist.

In einer anderen Ausgestaltung sind die ersten Strömungskanäle für das zugeführte Ausgangsgas um die Flachrohre 30 und die zweiten Strömungskanäle für das abströmende Spaltgas in den Flachrohren 30 vorgesehen.

Die ersten Strömungskanäle 31 für das zugeführte Ausgangsgas sind mit den Innenrohren 11 verbunden, sodass das in dem Flachrohrwärmetauscher 3 vorgewärmte Ausgangsgas über die Innenrohre 11 unter den in dem Reaktorraum 14 angeordneten Katalysator 2 geleitet wird.

Der Reaktor 1 dient der Durchführung endothermer Reaktionen, wie beispielsweise einer Spaltung von Ammoniak zu Wasserstoff und Stickstoff. Im Gebrauch wird der Reaktorraum 14 daher von außen für die endotherme Reaktion beheizt, insbesondere auf Temperaturen über 600° C. Das durch die Spaltung erzeugte und aus dem Reaktorraum abströmende Spaltgas weist eine Wärme auf. Mittels des Wärmetauschers 3 ist es möglich, die Wärme des Spaltgases zurückzugewinnen und so ein Bedarf an Heizenergie für die in dem Reaktorraum 14 durchgeführte endotherme Reaktion, insbesondere zur Spaltung von Ammoniak, zu reduzieren.

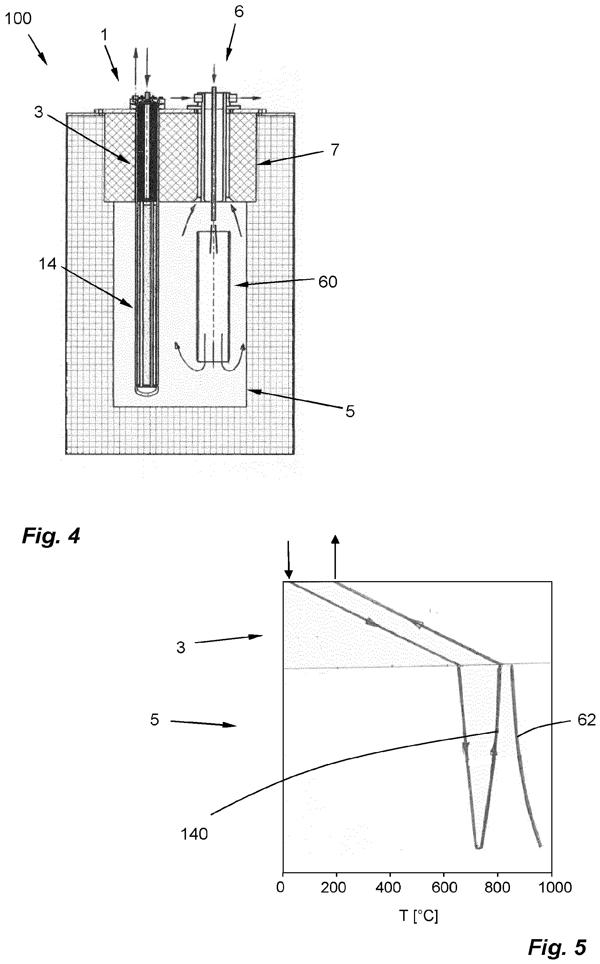

Fig. 4 zeigt schematisch eine Vorrichtung 100 für endotherme Reaktionen, insbesondere zur Spaltung von Ammoniak, mit einem wärmeisolierten Brennraum 5, einem Brenner 6 und einem Reaktor 1 gemäß Fig. 1 in einem Längsschnitt. Der Brenner 6 und der Reaktor 1 sind in dem dargestellten Ausführungsbeispiel in einer gemeinsamen Halterung 7 angeordnet. Die Halterung 7 dient in dem dargestellten Ausführungsbeispiel als Abdeckung, mittels welcher der Brennraum 5 von oben verschließbar ist. Sämtliche Anschlüsse des Reaktors 1 und des Brenners 6 sind dabei von oben zugänglich.

Mittels der Halterung 7 ist der Reaktor 1 derart an dem Brennraum 5 positionierbar, dass der Reaktorraum 14 des Reaktors 1 in dem Brennraum 5 angeordnet ist, wobei der Reaktorraum 14 stofflich von dem Brennraum 5 getrennt angeordnet ist und von außen über eine in dem Brennraum 5 erzeugte Wärme beheizt wird.

Der Flachrohrwärmetauscher 3 des Reaktors 1 ist in dem dargestellten Ausführungsbeispiel vollständig von der Halterung 7 umgeben. Die Halterung dient dabei in einer Ausgestaltung auch als Wärmeisolierung des Flachrohrwärmetauschers 3.

Der Brenner 6 ist durch den Fachmann geeignet gestaltbar, wobei der Brenner 6 vorzugsweise wie durch Pfeile angedeutet als Rekuperativ- oder ein Regenerativ-Brenner gestaltet ist, und eine Abwärme der Verbrennung nutzt. In dem dargestellten Ausführungsbeispiel ist ein Flammrohr 60 vorgesehen, wobei eine Verbrennung in dem Flammrohr 60 stattfindet und Heizgase entlang des Reaktorraums 14 zurückgeführt werden.

In dem in Fig. 4 dargestellten Ausführungsbeispiel ist lediglich ein Reaktor 1 vorgesehen. In anderen Ausgestaltungen umfasst die Vorrichtung 100 mehrere Reaktoren 1.

Fig. 5 zeigt schematisch einen Temperaturverlauf in Grad Celsius der Gasströme in dem Flachrohrwärmetauscher 3 und dem Brennraum 5. Wie schematisch in Fig. 5 angedeutet, wird der Flachrohrwärmetauscher 3 in Gegenstrom durchströmt, wobei das zugeführte Ausgangsgas durch das abströmende Spaltgas erwärmt wird. In dem dargestellten Temperaturverlauf wird das Ausgangsgas auf eine hohe Temperatur von über 600°C erwärmt. Der durch den Reaktorraum 14 (vgl. Fig. 4) strömende Gasstrom wird mittels des außenseitig entlang des Reaktorraums aufsteigende Heizgas 62 erwärmt, wobei aufgrund der Vorerwärmung des Ausgangsgases im Flachrohrwärmetauscher 3 eine Erwärmung um eine geringere Temperaturdifferenz notwendig ist als bei herkömmlichen Vorrichtungen. Dies erlaubt auch einen Wärmeübertragung im Gleichstromprinzip durch das aufströmende Heizgas 62, wie schematisch in Fig. 5 dargestellt.

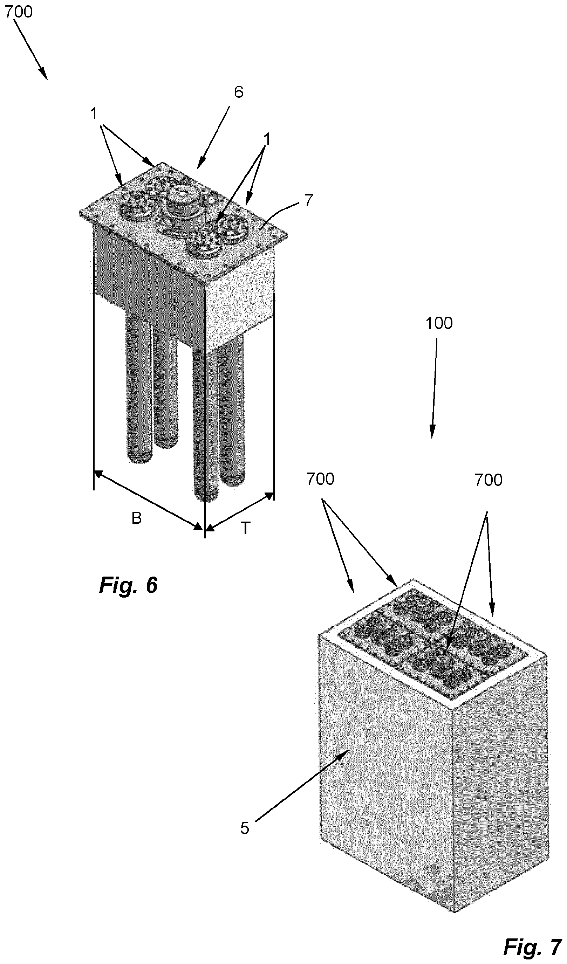

Fig. 6 zeigt ein Modul umfassend eine Halterung 7, einen Brenner 6 und mehrere, in dem dargestellten Ausführungsbeispiel vier Reaktoren 1 in einer perspektivischen Darstellung. Die Reaktoren 1 und der Brenner 6 sind dabei an der Halterung 7 angebracht und mittels der Halterung 7 an einem Brennraum 5 (vgl. Fig. 4) montierbar.

Die Abmessungen des Moduls 700 sind dabei in Ausführungsformen derart gewählt, dass das Modul 700 als vormontierte Baugruppe bereitstellbar und an einen Verwendungsort über Straßenwege transportierbar ist.

In einer Ausgestaltung haben die Reaktoren 1 eine Länge von 2 m, wobei vier Reaktoren 1 in einer Halterung 7 mit einem Grundriss mit der Abmessung Breite B x Tiefe T = 0,5 m x 0,8 m vormontierbar sind.

Das Modul 700 ist je nach Anwendungsfall allein oder in Kombination mit weiteren Modulen 700 einsetzbar.

Fig. 7 zeigt eine Vorrichtung für endotherme Reaktionen, insbesondere zur Spaltung von Ammoniak, mit einem wärmeisolierten Brennraum 5 umfassend vier Module 700 gemäß Fig. 6 in einer perspektivischen Darstellung. Wie in Fig. 7 dargestellt, sind die Module 700 an einem gemeinsamen Brennraum 5 angebracht, wobei der Brennraum 5 mittels der Module 700 von oben verschlossen wird. Die dargestellte Anordnung ist jedoch lediglich beispielhaft und es sind zahlreiche Abwandlungen mit mehr oder weniger als vier Modulen 700 denkbar.

## Patentansprüche

1. Reaktor für endotherme Reaktionen, insbesondere zur Spaltung von Ammoniak, mit einem Einlass (12) für eine Zufuhr eines Ausgangsgases und einem Auslass (13) für eine Abfuhr von Spaltgas, und mit einem von außen für eine endotherme Reaktion beheizbaren, mit einem Katalysator (2) befüllten Reaktorraum (14), **dadurch gekennzeichnet, dass** in dem Reaktor (1) ein Flachrohrwärmetauscher (3) umfassend Flachrohre (30) mit Strömungskanälen (31, 32) für das zugeführte Ausgangsgas und das abströmende Spaltgas in und zwischen den Flachrohren (30) angeordnet ist, wobei der Flachrohrwärmetauscher (3) derart angeordnet ist, dass er von einem zu dem Reaktorraum (14) strömenden Ausgangsgas und von einem aus dem Reaktorraum (14) abströmenden Spaltgas durchströmbar ist, sodass Energie des abströmenden Spaltgases auf das zugeführte Ausgangsgas übertragbar ist.

2. Reaktor nach Anspruch 1, **dadurch gekennzeichnet, dass** eine Spaltweite der Strömungskanäle (31, 32) kleiner 3 mm ist.

3. Reaktor nach Anspruch 1 oder 2, **dadurch gekennzeichnet, dass** eine Wärmetauscherfläche das ca. 2-fache bis ca. 4-fache einer beheizten Fläche des Reaktors beträgt.

4. Reaktor nach Anspruch 1, 2 oder 3, **dadurch gekennzeichnet, dass** der Reaktor (1) ein Außenrohr (10) mit einem ersten Ende (101), an welchem der Einlass (12) und der Auslass (13) angeordnet sind, und mit einem geschlossenen zweiten Ende (102) aufweist, wobei der Flachrohrwärmetauscher (3) ein zylindrischer Flachrohrwärmetauscher (3) ist, der zwischen dem ersten Ende (101) und dem Reaktorraum (14) in dem Außenrohr (10) angeordnet ist.

5. Reaktor nach Anspruch 4, **dadurch gekennzeichnet, dass** der Reaktor ein in dem Reaktorraum (14) angeordnetes Innenrohr (11), vorzugsweise zwei in dem Reaktorraum (14) angeordnete Innenrohre (11) aufweist, wobei das in dem Reaktorraum (14) angeordnete Innenrohr (11) oder die in dem Reaktorraum (14) angeordneten Innenrohre (11) über erste Strömungskanäle (31) des Wärmetauschers (3) mit dem Einlass (12) verbunden ist/sind.

6. Reaktor nach Anspruch 4 oder 5, **dadurch gekennzeichnet, dass** das Außenrohr (10) für einen Überdruck, insbesondere für einen Überdruck bis maximal 20 bar ausgelegt ist.

7. Reaktor nach einem der Ansprüche 1 bis 6, **dadurch gekennzeichnet, dass** ein Kanal (4) für eine Zufuhr des Katalysators (2) vorgesehen ist, wobei vorzugsweise der Flachrohrwärmetauscher (3) den Kanal (4) umgibt.

8. Vorrichtung für endotherme Reaktionen mit einem wärmeisolierten Brennraum (5) und mit einem Reaktor (1) nach einem der Ansprüche 1 bis 7, wobei der Reaktorraum (14) des Reaktors (1) in dem Brennraum (5), von diesem stofflich getrennt angeordnet ist.

9. Vorrichtung nach Anspruch 8, **dadurch gekennzeichnet, dass** ein mittels des Spaltgases, einem Anodenrestgas einer Brennstoffzelle und/oder einem Spülgas einer Druckwechselanlage betreibbarer Brenner (6) vorgesehen ist, wobei der Brenner insbesondere als Rekuperativ- oder ein Regenerativ-Brenner gestaltet ist.

10. Vorrichtung nach Anspruch 8 oder 9, **dadurch gekennzeichnet, dass** der Reaktorraum (14) in dem Brennraum (5) derart angeordnet ist, dass ein Gasstrom (140) durch den Reaktorraum (14) von einem an einer Außenseite des Reaktorraums strömenden Heizgas (62) im Gleichstromprinzip erwärmbar ist.

11. Vorrichtung nach Anspruch 8, 9 oder 10, **dadurch gekennzeichnet, dass** der Brennraum (5) mittels elektrischer Energie beheizbar ist.

12. Vorrichtung nach einem der Ansprüche 8 bis 11, **dadurch gekennzeichnet, dass** der Reaktor (1) in einer als Abdeckung für den Brennraum (5) dienenden Halterung (7) eingesetzt ist.

13. Modul umfassend mehrere Reaktoren (1), insbesondere vier Reaktoren (1), nach einem der Ansprüche 1 bis 7 und einen Brenner (6), wobei die Reaktoren (1) und der Brenner (6) an einer Halterung (7) angebracht sind.

14. Modul nach Anspruch 13, **dadurch gekennzeichnet, dass** die Halterung (7) zumindest bereichsweise aus einem wärmeisolierenden Material gefertigt ist und die Reaktoren (1) im Bereich der Flachrohrwärmetauscher (3) umgibt.

15. Verfahren zur Durchführung endothermer Reaktionen, insbesondere zur Spaltung von Ammoniak, in einem Reaktor mit einem von außen für eine endotherme Reaktion beheizbaren, mit einem Katalysator befüllten Reaktorraum, mit einem Einlass für eine Zufuhr eines Ausgangsgases und einem Auslass für eine Abfuhr von Spaltgas, und mit einem stromaufwärts des Reaktorraums in dem Reaktor angeordneten Flachrohrwärmetauscher, wobei der Flachrohrwärmetauscher von einem zugeführten Ausgangsgas und einem abströmenden Spaltgas durchströmt wird, sodass Energie des abströmenden Spaltgases auf das zugeführte Ausgangsgas übertragen wird.
